# EUROPÄISCHE PATENTSCHRIFT

(11) **EP 2 399 227 B1**
(45) Veröffentlichungstag und Bekanntmachung des Hinweises auf die Patenterteilung: **02.12.2015**
(21) Anmeldenummer: 10704356.4
(22) Anmeldetag: 12.02.2010
(51) Int. Cl.: G06K 19/077

(54) **VERFAHREN ZUR HERSTELLUNG EINER EIN FENSTER ENTHALTENDEN ABSCHLUSSSCHICHT FÜR EINEN TRAGBAREN DATENTRÄGER**
METHOD OF PRODUCING A FINISHING LAYER COMPRISING A WINDOW FOR A PORTABLE DATA CARRIER
MÉTHODE DE FABRICATION D' UNE COUCHE DE FINISSION COMPORTANT UNE FENÊTRE POUR UN SUPPORT DE DONNÉES PORTABLE

(30) Priorität: 17.02.2009 DE 102009009263
(43) Veröffentlichungstag der Anmeldung: 28.12.2011
(73) Patentinhaber: Giesecke & Devrient GmbH, 81677 München (DE)
(72) Erfinder: HUBER, Peter, 82256 Fürstenfeldbruck (DE); KOHL, Klaus, 83714 Miesbach (DE); ROMAN, Fabik, 95153 Klasov (SK); SCHELLENBERGER, Christina, 85748 Garching (DE); GRUNDWÜRMER, Manuela, 81543 München (DE)
(86) Internationale Anmeldenummer: PCT/EP2010/051806
(87) Internationale Veröffentlichungsnummer: WO 2010/094633

(56) Entgegenhaltungen:
- WO-A1-2008/147061
- WO-A2-2008/015676

## Beschreibung

Die Erfindung betrifft ein Verfahren zur Herstellung einer ein Fenster enthaltenden Abschlußschicht, die es, verwendet in einem tragbaren Datenträger, erlaubt ein unter der Abschlußschicht angeordnetes Anzeigeelement durch das Fenster in Aufsicht zu betrachten: Die Erfindung betrifft weiter einen tragbaren Datenträger mit einem aktiven Anzeigeelement sowie ein Verfahren zu seiner Herstellung. Insbesondere betrifft die Erfindung eine Chipkarte mit Display.

Chipkarten mit Display und Verfahren zur ihrer Herstellung sind in großer Zahl bekannt. So ist beispielsweise aus der WO 2008/147061 A1 ein Herstellungsverfahren entnehmbar, gemäß dem zunächst eine Platine mit elektronischen Bauelementen, das sind: das Display, der IC mit Kontaktfeld, eine Batterie sowie ein Druckknopf mitsamt benötigter Verdrahtung, in einem Rahmen plaziert und mit Kunstharz übergossen wird, so daß eine plane Struktur entsteht, deren Oberseite das Display enthält. Das Kunstharz wird ausgehärtet, die Oberflächen werden geglättet. Anschließend werden Ober- und Unterseite der entstandenen Struktur mit einer bedruckten Deckschicht abgeschlossen, wobei die oberseitige Deckschicht Ausnehmungen aufweist, die das Display und das Kontaktfeld frei lassen. Alternativ können Ober- und Unterseite oder nur die Oberseite vollflächig mit einer transparenten Deckschicht abgeschlossen werden. Die Deckschichten werden unter Temperatureinwirkung mit der Zwischenstruktur verbunden. Das bekannte Verfahren liefert brauchbare Karten, jedoch weist die das Display enthaltende Oberfläche um das Display herum einen spürbaren Rand auf, der von der Ausnehmung in der Deckfolie herrührt. Bei Verwendung einer transparenten Deckschicht ist es andererseits in der Regel erforderlich, alphanumerische Informationen direkt auf die das Displayelement und die weiteren Bauelemente enthaltende Zwischenstruktur aufzubringen. Die Erzielung einer guten optischen Qualität ist hierbei produktionstechnisch anspruchsvoll.

Aus dem "Handbuch der Chipkarten" von W. Rankl, W. Effing, Carl Hanser Verlag München, 5. Auflage, 2008, sind die Grundlagen zu Funktion, Aufbau und Herstellung von Chipkarten bekannt. Aus dem Buch ist auch eine Chipkarte mit Display entnehmbar. Auf das Buch wird insbesondere zu den im Zusammenhang mit der Ausführung der Erfindung relevanten Themen Kartenmaterialien, Einbau und Aufbau von Bauelementen für Chipkarten und Laminieren ausdrücklich verwiesen.

Aus der WO 2008/015676 A2 ist ein Verfahren zum Herstellen einer mit einem LCD-Display ausgestatteten Smartcard bekannt. Dabei wird ein Satz von insgesamt sechs PVC-Folien bereitgestellt, die in zwei Stufen laminiert werden. In zwei PVC-Folien, die in der fertigen Karte Zentralschichten bilden, sowie teilweise in eine unmittelbar angrenzende PVC-Folie, die als Druckannahmeschicht dient, sind Ausnehmungen für das LCD-Display eingebracht. Die über dem LCD-Display angeordnete Druckannahmeschicht sowie die zwei die Außenschichten bildenden Deckfolien sind transparent ausgeführt. Der gesamte Schichtaufbau hat eine Dicke von 850 µm.

Ein grundsätzliches Problem bei der Herstellung von Chipkarten mit Display, die insbesondere den Vorgaben der einschlägigen ISO-Norm 7810 entsprechen, ist die Einhaltung der zulässigen Höchstdicke. Displayelemente und die häufig damit einhergehenden flachen Batterien besitzen regelmäßig Bauhöhen, die bereits in der Größenordnung der Höchstwerte für die Kartendicke gemäß der genannten ISO-Norm liegen. Regelmäßig ist es deshalb bei der Herstellung von Chipkarten mit Display notwendig darauf zu achten, daß die Dicke des Kartenaufbaus ober- und unterhalb des Displayelementes möglichst klein ist. Trotz der geringen zur Verfügung stehenden Bauhöhe müssen dabei die druck- und biegeempfindlichen Displayelemente ausreichend gegen Druck und Biegebelastungen geschützt werden. Vor allem die Gestaltung der über dem Displayelement liegenden Abschlußschicht gestaltet sich deshalb regelmäßig schwierig.

Es ist Aufgabe der Erfindung eine Abschlußschicht und ein Verfahren zu ihrer Herstellung anzugeben, die unter Beibehaltung eines ausreichenden mechanischen Schutzes des Anzeigeelementes die Herstellung eines tragbaren Datenträgers mit aktivem Anzeigeelement erleichtert.

Fortsetzung mit S. 3,1. Abs. der ursprünglichen Anmeldunterlagen

Diese Aufgabe wird gelöst durch ein Verfahren mit den Merkmalen des unabhängigen Anspruchs 1. Die Aufgabe wird ebenfalls gelöst durch einen tragbaren Datenträger mit den Merkmalen des unabhängigen Anspruchs 10.

Die Erfindung beruht auf dem Ansatz, eine Abschlußfolie vor allem drucktechnisch herzustellen. Dem liegt die Erkenntnis zugrunde, daß es durch richtige Zusammenstellung geeigneter Druckmaterialien möglich ist, Verblockungen zwischen Halbzeugen zu vermeiden, obwohl zumindest teilweise lösemittelhaltige Druckmaterialien eingesetzt werden müssen. Erfindungsgemäß wird auf eine Trägerschicht zunächst eine vergleichsweise dicke Deckschicht aus wasserbasierender Farbe aufgebracht, wodurch eine im Vergleich zu den folgenden Schichten sehr dicke lösemittelfreie Grundstruktur entsteht, auf die dann zumindest auch dünne Schichten lösemittelhaltiger Materialien aufgetragen werden können, ohne daß es zu Verblockungen kommt. Indem es Verblockungen weitestgehend vermeidet, bietet das erfindungsgemäße Verfahren den Vorteil, daß es in Einzelarbeitsgängen ausführbar ist. Die Ausführung des gesamten Verfahrens läßt sich dadurch produktionstechnisch gut optimieren. Es eignet sich insbesondere zur Herstellung von Datenträgern in Gestalt von Chipkarten mit den Außenabmessungen gemäß einer ISO-Norm. Das erfindungsgemäße Verfahren zeichnet sich dadurch aus, daß es über der Darstellungsfläche des aktiven Anzeigeelementes den Aufbau einer sehr dünnen Abschlußschicht erlaubt, die es ermöglicht, die durch die ISO-Normen vorgegebenen Dickenhöchstwerte einzuhalten und die dabei trotzdem einen ausreichenden mechanischen Schutz des aktiven Anzeigenelementes gewährleistet. So lassen sich erfindungsgemäß Gesamtdicken für die Abschlußschicht von 60 µm und darunter erzielen, während eine gemäß dem Stand der Technik aufgebrachte, bedruckte Folie alleine typischerweise eine Dicke von wenigstens 100 µm aufweist, um eine Bedrucken zu ermöglichen. In besonders vorteilhafter Ausgestaltung werden die Farbschichten jeweils mit einer Dicke von 10 bis 30 µm im trockenen Zustand aufgebracht. Die erste Vermittler-Schicht wird mit einer Dicke im trockenen Zustand von 10 bis 30 µm aufgebracht, die zweite Vermittler-Schicht vorteilhaft mit einer Dicke im trockenen Zustand von 2 bis 6 µm. Die nach dem erfindungsgemäßen Verfahren hergestellte Abschlußschicht hat weiter den Vorteil, daß sie eine völlig glatte Oberfläche liefert, die insbesondere auch über dem Anzeigenelement keine merklichen Störungen durch Buckel oder Kanten aufweist. Ein weiterer Vorteil einer nach dem erfindungsgemäßen Verfahren hergestellten Abschlußschicht ist, daß diese ohne besonderen Aufwand mit optischen Informationen von hoher Qualität versehen werden kann. Ein erfindungsgemäßer Datenträger zeichnet sich durch ein klar eingefaßtes Anzeigenelement aus.

Ein Ausführungsbeispiel der Erfindung wird nachfolgend unter Bezugnahme auf die Zeichnung näher erläutert. Es zeigen
- Fig.1: eine perspektivische Darstellung eines erfindungsgemäßen tragbaren Datenträgers,
- Fig. 2: eine schematische Darstellung des Schichtaufbaus eines erfindungsgemäßen Datenträges im Querschnitt,
- Fig. 3, 4: Varianten des in Fig. 2 dargestellten Schichtaufbaus, und
- Fig. 5: eine Veranschaulichung der Durchführung des Schrittes des Aufbringens der Ablackierung in einem Lackwerk.

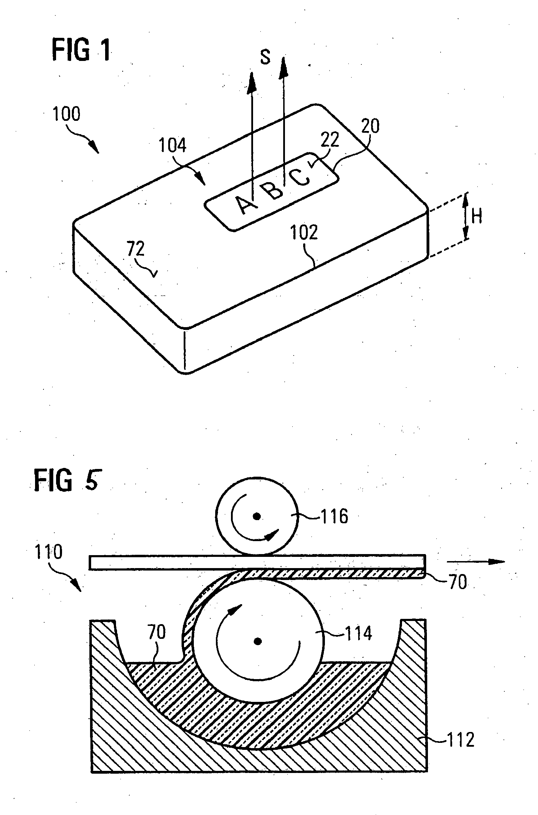

Fig. 1 zeigt in schematischer perspektivischer Schrägansicht einen erfindungsgemäßen tragbaren Datenträger 100 mit einem aktiven Anzeigenelement 20, das durch ein in der Oberfläche 72 des Datenträgers 100 ausgebildetes Fenster 104 zu einer durch Pfeile angedeuteten Sichtseite S hin sichtbar ist. Der tragbare Datenträger 100 besteht, wie nachfolgend erläutert, aus mehreren Schichten, die in Form eines Schichtenstapels miteinander verbunden sind, wobei zumindest die Oberfläche 72 eben ist und die beiden Oberflächen 72, 82 typisch, aber nicht zwingend, im wesentlichen planparallel zueinander liegen. Typischerweise besitzt der tragbare Datenträger 100 die Gestalt einer Chipkarte mit durch zugehörige Normen, vor allem der ISO-Norm 7810, vorgegebenen Außenabmessungen; bei Ausführung nach ISO 7810 als Chipkarte, wie sie in Fig. 1 angedeutet ist, besitzt der tragbare Datenträger 100 z.B. eine Höhe H von maximal 768 µm. Der tragbare Datenträger 100 kann jedoch auch andere Außenabmessungen besitzen, beispielsweise kann er rund oder herzförmig sein; auch ist die Planparallelität der Oberflächen 72 und 82 nicht zwingend. Die Höhe H kann vielmehr über die Fläche des tragbaren Datenträgers 100 auch variieren und beispielsweise an der abgewandten Oberfläche eine Kuppe formen.

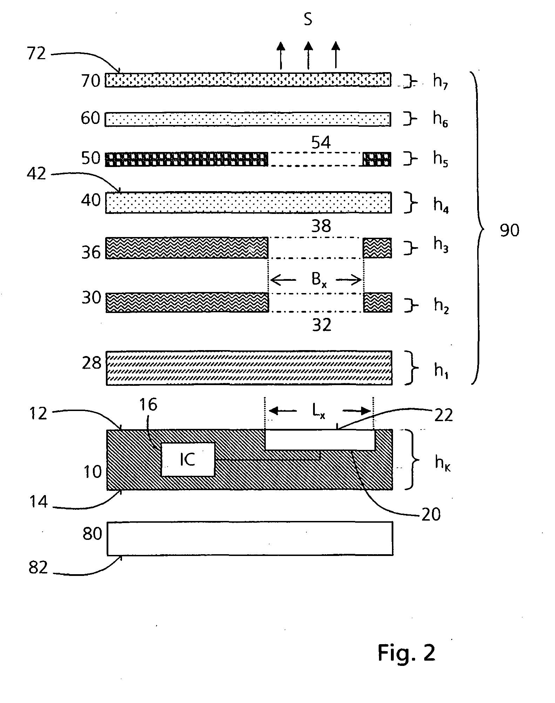

Das aktive Anzeigenelement 20 erlaubt auf seiner Darstellungsfläche 22 eine sichtbare Darstellung alphanumerischer Zeichen, zumindest bestimmter Zeichen. Es kann von jeder beliebigen Bauart sein, die es erlaubt, das aktive Anzeigenelement 20 in den Kartenkörper des tragbaren Datenträgers 100 zu integrieren. Typischerweise ist das aktive Anzeigenelement als LED oder TFT-Display ausgebildet. Künftig ist aber auch mit anderen Ausführungsformen zu rechnen, insbesondere mit Anzeigen des Typs "Elektronisches Papier". Das fortan als Display bezeichnete aktive Anzeigenelement 20 liegt im Inneren des Kartenkörpers des tragbaren Datenträgers 100 unterhalb der Oberfläche 72 und ist von der Sichtseite S her durch die obere Abschlußschicht 90 hindurch erkennbar. Im Kartenkörper können weitere elektronsche und/ oder mechanische Bauelemente untergebracht sein, insbesondere, wie in Fig. 2 stellvertretend angedeutet, ein integrierter Schaltkreis (IC) 16; weitere typische Bauelemente sind z.B. eine Batterie zur Energieversorgung des ICs und des Displays oder Betätigungsmittel für Nutzereingaben. Da die weiteren Bauelemente nicht erfindungswesentlich sind, soll darauf hier nicht weiter eingegangen werden. Die Darstellungsfläche 22 besitzt eine Flächengeometrie, die im folgenden durch die Länge L repräsentiert wird.

Fig. 2 zeigt in einer Querschnittsdarstellung den Schichtaufbau eines tragbaren Datenträgers, wie er in Fig.1 dargestellt ist. Anhand Fig. 2 werden sowohl der Aufbau des erfindungsgemäßen Datenträgers 100 wie der Ablauf eines Verfahrens zu seiner Herstellung erläutert. Mit Blick auf die genannte typische Ausführungsform wird der tragbare Datenträger 100 nachfolgend, ohne daß damit eine Festlegung auf eine bestimmte Form beabsichtigt ist, als Chipkarte bezeichnet.

Die Chipkarte 100 basiert auf einer Kernschicht 10, auf deren Oberseite 12 eine obere Abschlußschicht 90 und auf deren Unterseite 14 eine untere Abschlußschicht 80 aufgebracht ist.

Alle Schichten 10, 80, 90 sind dauerhaft miteinander verbunden. Die Herstellung der Außenkontur 102 der Chipkarte 100 kann erfolgen, indem zunächst die Schichten 10, 80, 90 im Bogen miteinander verbunden werden und anschließend durch Stanzen oder Schneiden die Außenkontur 102 erzeugt wird. Auf der anderen Seite ist es möglich, die Schichten 10, 80, 90 bereits vor dem Verbinden in die benötigte Größe zu bringen und sie z.B. vor dem Verbinden aus einem Bogen zu stanzen oder zu schneiden. Weiter sind Mischformen der beiden Konzepte möglich, in denen z.B. die Kernschicht 10 vorab in die Endform mit der Außenkontur 102 gebracht wird und die beiden Abschlußschichten erst nach dem Verbinden zugeschnitten oder ausgestanzt werden. Im folgenden werden unter den Schichten 10, 80, 90 stets Schichten mit der Außenkontur 102 der fertigen Chipkarte 100 verstanden. Die beschriebenen Arbeitsgänge erfolgen, soweit möglich, zweckmäßig am Einzelnutzen; sie können aber ohne weiteres jeweils auch am gesamten Bogen erfolgen.

An der Oberseite 12 der Kernschicht 10 ist ein Display 20 so angeordnet, daß seine Darstellungsfläche 22 zur Sichtseite S hin weist. Weiter sind in der Kernschicht 10 zweckmäßig alle weiteren Bauelemente der Chipkarte 100 angeordnet, wie etwa der in den Fig. 1 bis 4 angedeutete integrierte Schaltkreis, Batterien, Speicher, Kommunikationselemente usw.

Die Kernschicht 10 besteht in einfacher und kostengünstiger Ausführung aus PVC, kann aber auch aus Polycarbonat, PET oder einem anderen geeigneten Kunststoff bestehen. Sie kann aus mehreren miteinander verbundenen Schichten aufgebaut oder als Einzelschicht ausgeführt sein. Die Kernschicht 10 besitzt eine Höhe h_{K} von typischerweise 200 bis 500 µm.

Die untere Abschlußschicht 80 kann eine einzelne bedruckte Folie sein, aber auch ein aus mehreren Folien gebildeter Verbund; ebenso kann sie als reine Druckschicht ausgeführt sein. Ohne weiteres ist es insbesondere möglich, die untere Abschlußschicht 80 auf dieselbe Weise auszuführen wie die obere Abschlußschicht 90. Die untere Abschlußschicht 80 ist grundsätzlich jedoch nicht Gegenstand der vorliegenden Erfindung, auf sie wird deshalb hier nicht weiter eingegangen.

Die zusammenfassend als obere Abschlußschicht 90 bezeichnete Schicht ist aus einer Folge von mehreren Schichten aufgebaut. Basis der oberen Abschlußschicht 90 bildet eine transparente Trägerschicht 28, die die gesamte Oberseite 12 der Kernschicht 10 einschließlich der Oberseite des Displays 20 bedeckt. Die Trägerschicht 28 wird als Folie bereitgestellt. Sie besitzt eine Höhe h₁ von 20 bis 100 µm und besteht aus einem beständigen transparenten Material, das stabil, bruchsicher und laminierfähig ist; zweckmäßig besteht die Trägerschicht 28 zum Beispiel aus transparentem PET (Polyethylen Terephthalat), insbesondere der Variante PETG

Über die Trägerschicht 28 ist eine erste opake Farbschicht 30 aufgebracht, welche eine Ausnehmung 32 mit einer Breite B aufweist; die Breite B steht dabei stellvertretend für alle Maße, die die ebene Fläche der Ausnehmung 32 beschreiben, also etwa ein Rechteck, einen Kreis, ein Oval oder auch eine kompliziertere Geometrie. Die opake Farbschicht 30 besitzt im trockenen Zustand eine Höhe h₂ von 10 bis 30 µm. Sie wird drucktechnisch im Siebdruck aufgebracht. Um die für Verhältnisse im Siebdruck große Auftragshöhe h₂ zu erzielen, wird ein grobes Sieb mit einer Maschenweite von 29 bis 78 µm und einer Maschenzahl von 43 bis 165 Faden/cm bei einer Fadendicke von 27 bis 46 µm eingesetzt, die Siebdicke liegt zwischen 43 und 98 µm. Die aufgebrachte opake Farbe ist bevorzugt wasserbasierend und weist dadurch eine sehr geringe Neigung zum Verblocken auf. Damit wird es möglich, die Druckschritte in separaten, einzelnen Arbeitsgängen bogenweise bzw. von einer Rolle nacheinander durchzuführen und die Bogen jeweils nach Durchführung eines Druckschrittes übereinander zu stapeln bzw. die bedruckte Rollenbahn wieder einzurollen, ohne daß es zwischen den Halbzeugen zu Verblockungen kommt. Die aufgebrachte opake Farbe kann dabei eine handelsübliche Farbe, z.B. ein Deckweiß, Schwarz, Rot u.sw. sein. Die Ausnehmung 32 liegt genau über der Darstellungsfläche 22 des Displays 20. Die Breite B ist passergenau oder zweckmäßig etwas kleiner bemessen als die korrespondierende Länge L der Darstellungsfläche 22 des Displays 20, so daß der Rand 34 der Ausnehmung 32 zur Sichtseite S hin den sichtbaren Rand des Displays 20 bildet.

Über die erste opake Farbschicht 30 wird, vorzugsweise mit denselben Siebparametern und auf dieselbe Weise wie diese, d.h. ebenfalls im Siebdruck, eine zweite opake Farbschicht 36 aufgebracht. Sie besitzt genau wie die erste Farbschicht 30 eine Ausnehmung 38, die vorzugsweise passergenau über der Ausnehmung 32 der ersten opaken Farbschicht 30 liegt. Die Höhe h₃ der zweiten opaken Farbschicht 36 beträgt im trockenen Zustand ebenfalls 10 bis 30 µm. Die Gesamthöhe der Farbschichten 30, 36 beträgt damit 20 bis 60µm oder 15 bis 80% der Dicke der Trägerschicht 28. Die aufgebrachte Farbe ist wiederum wasserbasierend und zweckmäßig identisch mit der für die Farbschicht 30 verwendeten Farbe. Ohne weiteres kann für die zweite Farbschicht 36 aber auch eine andere Farbe als für die erste Farbschicht 30 - also etwa Blau, wenn für die erste Farbschicht 30 Weiß gewählt wurde - eingesetzt werden, oder eine Farbe mit einer größeren oder kleineren Opazität - also etwa halbtransparentes Weiß, wenn die erste Farbschicht 30 deckend weiß ist. Das grobe Sieb in Verbindung mit den die Opazität bewirkenden Pigmenten in der Farbe bewirken, daß die Oberseite der Farbschicht 36 relativ rauh ist. Nach dem Auftrag der zweiten Farbschicht 36 können die danach vorliegenden Halbzeuge wieder zwischengestapelt oder aufgerollt werden, ohne daß es zu Verblockungen kommt. In einer vorteilhaften Ausführungsvariante kann nur eine einzelne Farbschicht 30 oder 36 vorgesehen sein.

Über die zweite opake Farbschicht 36 wird im folgenden Schritt eine erste Vermittler-Schicht 40 aufgebracht. Die Vermittler-Schicht 40 dient zur Vorbereitung des Auftrags der folgenden Schicht. Sie gewährleistet insbesondere eine ausreichende Haftung zwischen der Farbschicht 36 und der Designschicht 50; zudem schafft sie eine glattere Oberfläche für die Designschicht. Im folgenden wird die Vermittler-Schicht 40, wie im Zusammenhang mit Druckauftragungen üblich, als Primer-Schicht 40 bezeichnet. Wie die beiden Farbschichten 30, 36 wird die Primer-Schicht 40 ebenfalls im Siebdruck aufgebracht. Zweckmäßig wird dabei ein grobes Sieb mit derselben oder einer zumindest ähnlichen Fadendichte wie für die beiden opaken Farbschichten 30,36 benutzt.

Die Primer-Schicht 40 ist transparent und wird vollflächig über die gesamte Fläche der zugrundeliegenden Kernschicht 10 aufgebracht, wobei auch die Ausnehmung 38 überdeckt wird. Wie die opaken Farbschichten 30,36 wird die Primer-Schicht 40 ebenfalls mit einer Dicke h₄ im trockenen Zustand von 10 bis 30 µm aufgetragen, d.h. die Dicke der Primer-Schicht 40 beträgt etwa 10 bis 40% der Dicke der Trägerschicht 28. Das für die Primer-Schicht 40 eingesetzte transparente Material ist lösemittelhaltig, wobei es so abgestimmt ist, daß es Höhenschwankungen der an ihrer Oberfläche rauhen Farbschicht 36 ausgleicht und die Primer-Schicht 40 an ihrer eigenen Oberseite 42 eine im Vergleich zur Oberseite der Farbschicht 36 sehr glatte und gut bedruckbare Oberfläche aufweist. Weiter ist das für Primer-Schicht 40 eingesetzte Material so abgestimmt, daß die Primer-Schicht 40 eine gute Verbindung zwischen der Farbschicht 36 und den darüberliegenden Schichten gewährleistet. Weiter ist das für Primer-Schicht 40 eingesetzte Material so abgestimmt, daß daß es trotz der Lösemittelhaltigkeit nicht zu störenden Verblockungen kommt. Grundsätzlich ist es möglich, die Primer-Schicht 40 im Offsetdruck aufzutragen, wobei ihre Höhe dann entsprechend verringert ist. Ein Aufbringen im Offset-Druck kommt vor allem in Betracht, wenn die nachfolgend aufgebrachte Design-Farbschicht 50 nur einen geringen Farbübertrag mit überwiegend geringen Farbschichtdicken aufweist, d.h. wenn die zweite Farbschicht 36 durch die Design-Farbschicht 50 nur wenig überdeckt wird.

Über die Primer-Schicht 40 wird nachfolgend eine Design-Farbschicht 50 aufgebracht, die ein graphisches Muster bildet. Der Auftrag erfolgt im Offsetdruck. Die Höhe h₅ der im folgenden Designschicht genannten Design-Farbschicht 50 beträgt trocken 1 bis 5 µm. Das graphische Muster kann opake und transparente Anteile aufweisen oder vollständig opak sein. Im letzteren Fall weist das durch die Designschicht erzeugte graphische Muster 50 über der Darstellungsfläche 22 und ggf. anderen freizuhaltenden Bauelementen, etwa Schaltern, eine Aussparung 54 auf, deren Geometrie auf die Geometrie der Ausnehmungen 38, 32 bzw. auf die Darstellungsfläche 22 des Displays abgestimmt ist, insbesondere kann das graphischen Muster passergenau auf die Geometrie der Ausnehmungen abgestimmt sein.

Auf die Designschicht 50 wird im nächsten Schritt vollflächig eine zweite Vermittler-Schicht 60 aufgetragen, die die gleiche Funktion hat wie die erste Primer-Schicht 40, und entsprechend im folgenden als zweite Primer-Schicht 60 bezeichnet wird. Die zweite Primer-Schicht 60 ist transparent und lösemittelhaltig. Im Unterschied zur ersten Primer-Schicht 40 besitzt die zweite Primer-Schicht 60 eine deutlich geringere Dicke als die erste und ihr Auftrag erfolgt jetzt im kostengünstigeren Offsetdruck. Der Auftrag erfolgt so, daß die Höhe h₆ der zweiten Primer-Schicht 60 in trockenen Zustand 1 bis 5 µm beträgt. Alternativ kann auch die zweite Primer-Schicht 60 im Siebdruck aufgetragen werden, wobei sie dann eine größere Dicke aufweist.

Über die Primer-Schicht 60 wird abschließend vollflächig eine transparente Ablackierung 70 mit einer Höhe h₇ im trockenen Zustand von 2 bis 6 µm aufgetragen. Der Auftrag der Ablackierung 70 erfolgt, wie in Fig. 5 angedeutet, in einem Lackwerk 110. Dabei wird der aufzubringende Lack 70 in einer Wanne 112 bereitgestellt und mittels einer Lackwalze 112 nach oben gegen den hierzu kopfüber, d.h. mit der Sichtseite S zur Lackwanne zugeführten Schichtaufbau aus den Schichten 28 bis 60 gefördert und unter Gegendruck von einer Gegendruck-Walze 116 mit einer definierten Dicke h₇ auf der zweiten Primer-Schicht 60 abgelagert. Durch die Aufbringung im Lackwerk 110 wird gewährleistet, daß die Ablackierung 70 eine über die gesamte Fläche gleichbleibende Dicke h₇ besitzt.

Alternativ zur Aufbringung im Lackwerk kann die Aufbringung der Ablackierung 70 grundsätzlich auch mit einem Druckwerk erfolgen, d.h. z.B. mittels einer Druckplatte.

Nach Fertigstellung der Abschlußschicht 90 bildet darin die Abfolge der transparenten Schichten 28, 40, 60, 70 und Ausnehmungen 32, 38 bzw. der Aussparung 54 ein Fenster 104, durch das hindurch die Darstellungsfläche 22 des Displays 20 von der Sichtseite S her sichtbar ist. Der Rand des Fensters 104 wird vorzugsweise durch den Rand 34 der Ausnehmungen 32,38 bestimmt.

Um optimierte Arbeitsabläufe zu erhalten, erfolgt die Durchführung der Schritte zum Ausbilden der Schichten 30, 36, 40, 50, 60, 70 auf einer Trägerschicht 28 regelmäßig in separaten Einzelarbeitsgängen, zwischen denen die Halbzeuge jeweils zwischengestapelt oder auf einer Rolle zwischengelagert werden. Während der Lagerzeit trocknen insbesondere die jeweils zuletzt aufgebrachten Schichten.

In bevorzugter Ausführungsform wird die obere Abschlußschicht 90 separat von der Kernschicht 10 und der unteren Abschlußschicht 80 hergestellt. Alle Schichten 10, 80 und 90 werden dann in einem Folgeschritt z.B. durch Laminieren miteinander verbunden. Das Vorgehen hat den Vorteil, daß das Display und die weiteren ggf. vorhandenen Bauelemente nicht durch Druckvorgänge belastet werden. Es ist es aber grundsätzlich auch möglich, die in Fig. 2 veranschaulichten Schichten unmittelbar auf der Kernschicht 10 aufzubauen.

Der vorbeschriebene Schichtaufbau und das Verfahren zu seiner Herstellung gestatten im Rahmen des grundlegenden Gedankens eine Reihe von Variationen. So können anstelle von zwei opaken Farbschichten 30,36 auch drei oder mehr oder andererseits auch nur eine einzelne opake Farbschicht aufgebracht werden; die Dicken h₂, h₃ der Farbschichten sind dann an die Anzahl der tatsächlich aufgebrachten opaken Farbschichten anzupassen. Ähnlich ist es möglich, die Primer-Schichten 40, 60 oder die Designschicht 50 in zwei oder mehr Lagen aufzubringen, dasselbe gilt für die Ablackierung 70.

Unter geeigneten Bedingungen oder auf Vorgabe können andererseits ggf. auch Schichten entfallen; so kann z.B. die Primer-Schicht 40 entfallen, wenn die Oberseite der Farbschicht 36 unmittelbar das Aufbringen der Design-Farbschicht 50 zuläßt. Ebenso kann auch auf die Primer-Schicht 60 verzichtet werden, wenn die Ablackierung 70 unmittelbar auf der Design-Farbschicht 50 haftet. Sofern ein geeignetes Material zur Verfügung steht, kann die Primer-Schicht 60 auch die Ablackierung 70 ersetzen oder zweite Primer-Schicht 60 und Ablackierung 70 können als eine kombinierte Schicht ausgeführt sein.

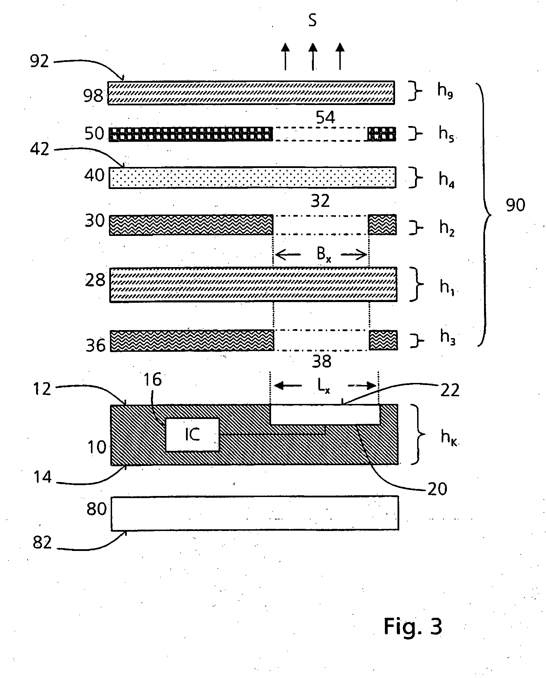

In einer in Fig. 3 veranschaulichten Ausführungsalternative zu Fig. 2 wird anstelle der Schichtenpaares Primer-Schicht 60 und Ablackierung 70 eine vorzugsweise transparente Schutzfolie 98 aufgebracht. Das Aufbringen der Schutzfolie 98 kann durch Laminieren erfolgen, zweckmäßig im Rahmen des ohnehin erfolgenden Laminierschrittes zum Verbinden der Schichten 10, 80 und 90. Sofern die Schutzfolie 98 nicht ausreichend auf der Design-Farbschicht 50 haftet, kann die zweite Primer-Schicht 60 beibehalten werden. Geeignete Folien haben in der Regel Dicken h₉ von 20 bis 50 µm, sind aber auch mit Stärkeri von 10 µm verfügbar. Sie können z.B. aus PETG, PC oder PVC bestehen.

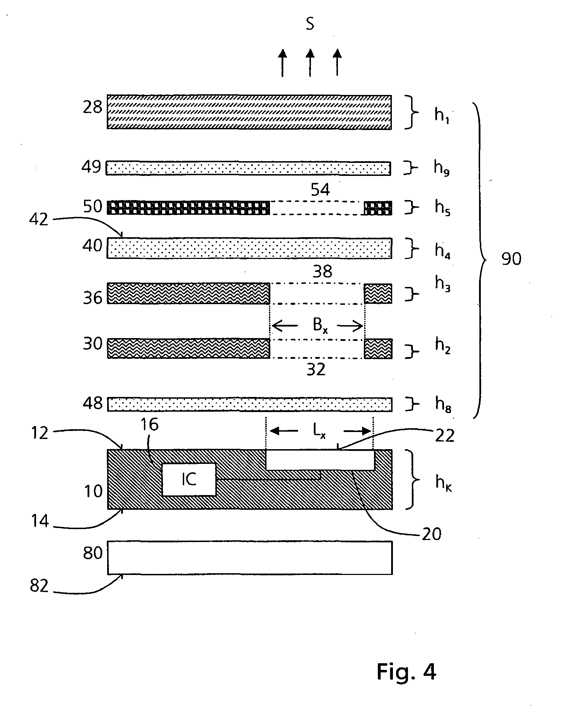

In weiteren Ausführungsvarianten zu Fig. 2 können die Schichten in teilweise veränderter Abfolge aufgebracht werden. So wird in einer, ebenfalls in Fig. 3 veranschaulichten Ausführungsvariante auf die Trägerschicht 28 eine Schichtfolge 30, 40, 50 wie anhand Fig. 2 beschrieben aufgebracht, dabei aber, im Unterschied zu Fig.2, nur eine Farbschicht 30 vorgesehen. Eine weitere Farbschicht 36 wird in dieser Variante nicht auf die erste Farbschicht 30 sondern stattdessen auf die der Kernschicht 10 zugewandte Unterseite der Trägerschicht 28 aufgebracht, so daß die beiden Farbschicht 30, 36 unter Zwischenlage der Trägerschicht 28 übereinanderliegen. Aufbringen und Beschaffenheit der weiteren Farbschicht 36 erfolgen wie anhand Fig. 2 erläutert. In einer weiteren, in Fig. 4 dargestellten Ausführungsvariante zu Fig. 2 liegt die Trägerschicht 28 nicht im Inneren des Gesamtaufbaus sondern bildet ihre Oberseite die Außenfläche der Abschlußschicht 90 und die gedruckten Schichten 30,36,40,50 werden in, im Vergleich zu der anhand Fig.2 beschriebenen umgekehrter Reihenfolge auf die Trägerschicht 28 aufgebracht. D.h. auf die der Kernschicht 10 zugewandte Unterseite der Trägerschicht 28 wird vorzugsweise unmittelbar die Design-Farbschicht 50, auf diese die erste Primer-Schicht 40 und auf diese die Farbschichten 30, 36 aufgebracht. Optional kann noch eine zweite Primer-Schicht 48 aufgebracht werden, die wie die erste Primer-Schicht 40 beschaffen ist, zweckmäßig aber eine geringere Stärke h₈ aufweist. Der Auftrag der zweiten Primer-Schicht 48 erfolgt vorzugsweise wieder im Siebdruck. Die danach vorliegende Abschlußschicht 90 wird mit der Kernschicht 10 verbunden, z.B. durch Laminieren.

## Patentansprüche

1. Verfahren zum Herstellen einer ein Fenster enthaltenden Abschlußschicht (90) für einen tragbaren Datenträger, **gekennzeichnet durch** folgende Schritte:
Bereitstellen einer transparenten Trägerschicht (28) auf Kunststoff-Basis,
Aufbringen einer opaken Farbschicht (30) im Siebdruck, wobei die Farbschicht (30) eine Ausnehmung (32) mit den Maßen des Fensters (104) aufweist,
Aufbringen einer ersten transparenten Vermittler-Schicht (40) im Siebdruck,
Aufbringen einer Design-Farbschicht (50) im Offsetdruck über die Vermittler-Schicht (40), und
Aufbringen einer transparenten Ablackierung (70) über die Design-Farbschicht (50).

2. Verfahren nach Anspruch 1, **dadurch gekennzeichnet, daß** vor dem Aufbringen der transparenten Ablackierung (70) über die Design-Farbschicht (50) eine zweite transparente Vermittler-Schicht (60) im Offsetdruck aufgebracht wird.

3. Verfahren nach einem der vorhergehenden Ansprüche, **dadurch gekennzeichnet, daß** die Ausnehmung (32) passergenau mit der Darstellungsfläche (22) des aktiven Anzeigenelementes (20) übereinstimmt oder etwas kleiner ist.

4. Verfahren nach einem der vorhergehenden Ansprüche, **dadurch gekennzeichnet, daß** auf die Trägerschicht (28) auf dieselbe Weise wie die erste eine zweite Farbschicht (36) aufgebracht wird, die eine mit der Ausnehmung (32) der ersten Farbschicht (30) übereinstimmende Ausnehmung (38) aufweist.

5. Verfahren nach einem der vorhergehenden Ansprüche, **dadurch gekennzeichnet, daß** für die Farbschicht (30, 36) eine wasserbasierende Farbe verwendet wird.

6. Verfahren nach einem der vorhergehenden Ansprüche, **dadurch gekennzeichnet, daß** die Farbschichten (30,36) jeweils mit einer Dicke von 10 bis 30 µm im trockenen Zustand aufgebracht werden.

7. Verfahren nach einem der vorhergehenden Ansprüche, **dadurch gekennzeichnet, daß** als Trägerschicht (28) eine PET-Folie, insbesondere eine PETG-Folie mit einer Dicke von 50 bis 150 µm verwendet wird.

8. Verfahren nach einem der vorhergehenden Ansprüche, **dadurch gekennzeichnet, daß** die zweite Farbschicht (36) auf die Unterseite der Trägerschicht (28) aufgebracht wird.

9. Verfahren nach einem der vorhergehenden Ansprüche, **dadurch gekennzeichnet, daß** die Design-Farbschicht (50) vor den Aufbringen der ersten Vermittler-Schicht (40) auf die Trägerschicht (28) aufgebracht wird.

10. Verwendung des Verfahrens nach Anspruch 1 zur Herstellung eines tragbaren Datenträgers mit einem Fenster in der oberen Abschlußschicht, indem eine Abschlußschicht (90) gemäß Anspruch 1 hergestellt und diese mit einer ein aktives Anzeigenelement (20) enthaltenden Kernschicht (10) so verbunden wird, daß das Fenster (104) über der Darstellungsfläche (22) des aktiven Anzeigenelementes (20) zu liegen kommt.

11. Tragbarer Datenträger mit einem aktiven Anzeigenelement, das in einer Kernschicht angeordnet ist und von einer Sichtseite her durch die Oberfläche des tragbaren Datenträgers hindurch sichtbar ist, **dadurch gekennzeichnet, daß** über der Kernschicht (10) mit dem aktiven Anzeigenelement (20) eine Abschlußschicht (90) ausgebildet ist, deren abgewandte Außenfläche die Oberfläche (72) des tragbaren Datenträgers (100) bildet, wobei die Abschlußschicht (90) umfaßt:
eine transparente Trägerschicht (28) mit einer Dicke von 50 bis 100 µm,
eine opake Farbschicht (30, 36), welche über der Darstellungsfläche (22) des aktiven Anzeigenelementes (20) ausgespart ist und eine Höhe (h₂, h₃) aufweist, die im trockenen Zustand 15 bis 80 % der Höhe (h₁) der Trägerschicht (28) beträgt,
eine Primer-Schicht (40), deren Höhe (h₄) im trockenen Zustand 10% bis 40% der Höhe (h₁) der Trägerschicht (28) beträgt,
eine Design-Farbschicht (50),
und eine Ablackierung (70), deren offene Oberseite die Oberfläche (72) des tragbaren Datenträgers (100) bildet.

12. Datenträger nach Anspruch 10, **dadurch gekennzeichnet, daß** die Farbschicht (30, 36) aus zwei oder mehr identischen Farbschichten besteht.

## Claims

1. A method for producing a finishing layer (90) containing a window for a portable data storage medium, **characterized by** the following steps:
Providing a transparent plastic-based support layer (28),
Applying an opaque color layer (30) by means of screen printing, wherein
the color layer (30) comprises a cutout (32) having the dimensions of the window (104),
Applying a first transparent buffer layer (40) by means of screen printing,
Applying a design color layer (50) over the buffer layer (40) by means of offset printing, and
Applying a transparent finish (70) over the design color layer (50).

2. The method according to Claim 1, **characterized in that** a second transparent mediatory layer (60) is applied over the design color layer (50) by means of offset printing prior to applying the transparent finish (70).

3. The method according to one of the preceding claims, **characterized in that** the cutout (32) precisely matches or is slightly smaller than the display area (22) of the active display element (20).

4. The method according to one of the preceding claims, **characterized in that** a second color layer (36) is applied to the support layer (28) in the same manner as the first, comprising a cutout (38) matching the cutout (32) of the first color layer (30).

5. The method according to one of the preceding claims, **characterized in that** a water-based color is used for the color layer (30, 36).

6. The method according to one of the preceding claims, **characterized in that** the color layers (30, 36) are each applied having a thickness of 10 to 30 µm in the dry state.

7. The method according to one of the preceding claims, **characterized in that** a PET film, particularly a PETG film having a thickness between 50 and 150 µm is used as the support layer.

8. The method according to one of the preceding claims, **characterized in that** the second color layer (36) is applied to the bottom side of the support layer (28).

9. The method according to one of the preceding claims, **characterized in that** the design color layer (50) is applied to the support layer (28) prior to applying the first buffer layer (40).

10. A use of the method according to Claim 1 for producing a portable data storage medium having a window in the top finishing layer, in that a finishing layer (90) according to Claim 1 is produced and said layer is bonded to a core layer (10) comprising an active display element (20), with the result that the window (104) comes to be located above the display area (22) of the active display element (20).

11. A portable data storage medium having an active display element disposed in a core layer, and which is visible from a viewing side through the surface of the portable data storage medium, **characterized in that** a finishing layer (90) is implemented over the core layer (10) having the display element (20), the outer surface of which facing away, forms the surface (72) of the portable data storage medium (100), wherein the finishing layer (90) comprises:
a transparent support layer (28) having a thickness between 50 and 100 µm,
an opaque color layer (30, 36) cut out above the display area (22) of the active display element (20) and having a height (h₂, h₃) between 10 and 80% of the height (h₁) of the support layer (28) in the dry state,
a primer layer (40), the height (h₄) thereof being between 10% and 40% of the height (h₁) of the support layer (28) in the dry state,
a design color layer (50),
and a finish (70), the open top side thereof forming the surface (72) of the portable data storage medium (100).

12. The data storage medium according to Claim 10, **characterized in that** the color layer (30, 36) is made of at least two identical color layers.

## Revendications

1. Procédé de fabrication d'une couche de finition (90) incluant une fenêtre pour un support de données portable, **caractérisé par** les étapes suivantes :
mise à disposition d'une couche support (28) transparente à base de matière plastique,
application d'une couche d'encre (30) opaque par sérigraphie, la couche d'encre (30) comportant un évidement (32) ayant les dimensions de la fenêtre (104),
application d'une première couche médiatrice transparente (40) par sérigraphie,
application d'une couche d'encre design (50) par impression offset par-dessus la couche médiatrice (40), et
application d'un vernissage (70) transparent par-dessus la couche d'encre design (50).

2. Procédé selon la revendication 1, **caractérisé en ce que**, avant l'application du vernissage (70) transparent par-dessus la couche d'encre design (50), une deuxième couche médiatrice (60) transparente est appliquée par impression offset.

3. Procédé selon une des revendications précédentes, **caractérisé en ce que** l'évidement (32) coïncide en repérage avec la surface de représentation (22) de l'élément d'affichage (20) actif ou est un peu plus petit.

4. Procédé selon une des revendications précédentes, **caractérisé en ce que**, sur la couche support (28), de la même manière que la première, une deuxième couche d'encre (36) est appliquée, laquelle comporte un évidement (38) coïncidant avec l'évidement (32) de la première couche d'encre (30).

5. Procédé selon une des revendications précédentes, **caractérisé en ce que**, pour la couche d'encre (30, 36), c'est une encre à base d'eau qui est utilisée.

6. Procédé selon une des revendications précédentes, **caractérisé en ce que** les couches d'encre (30, 36) sont respectivement appliquées à une épaisseur de 10 à 30 µm à l'état sec.

7. Procédé selon une des revendications précédentes, **caractérisé en ce que**, en tant que couche support (28), c'est une feuille en PET, en particulier une feuille en PETG d'une épaisseur de 50 à 150 µm, qui est utilisée.

8. Procédé selon une des revendications précédentes, **caractérisé en ce que** la deuxième couche d'encre (36) est appliquée sur la face inférieure de la couche support (28).

9. Procédé selon une des revendications précédentes, **caractérisé en ce que** la couche d'encre design (50) est appliquée avant l'application de la première couche médiatrice (40) sur la couche support (28).

10. Utilisation du procédé selon la revendication 1 pour la fabrication d'un support de données portable ayant une fenêtre dans la couche de finition supérieure, ce qui a lieu en ce qu'une couche de finition (90) est fabriquée conformément à la revendication 1 et est jointe de telle façon à une couche noyau (10) incluant un élément d'affichage (20) actif que la fenêtre (104) se situe au-dessus de la surface de représentation (22) de l'élément d'affichage (20) actif.

11. Support de données portable ayant un élément d'affichage actif qui est agencé dans une couche noyau et est visible, à partir d'une face offerte à la vue, à travers la surface du support de données portable, **caractérisé en ce que**, au-dessus de la couche noyau (10) comportant l'élément d'affichage (20) actif, une couche de finition (90) est réalisée, dont la face extérieure tournée à l'opposé constitue la surface (72) du support de données portable (100), la couche de finition (90) comprenant :
une couche support (28) transparente d'une épaisseur de 50 à 100 µm,
une couche d'encre (30, 36) opaque qui est évidée au-dessus de la surface de représentation (22) de l'élément d'affichage (20) actif et qui présente une hauteur (h₂, h₃) qui, à l'état sec, équivaut à entre 15 et 80% de la hauteur (h₁) de la couche support (28),
une couche d'apprêt (40) dont la hauteur (h₄), à l'état sec, équivaut à entre 10 et 40% de la hauteur (h) de la couche support (28),
une couche d'encre design (50),
et un vernissage (70) dont la face supérieure ouverte constitue la surface (72) du support de données portable (100).

12. Support de données portable selon la revendication 10, **caractérisé en ce que** la couche d'encre (30, 36) consiste en deux ou plusieurs couches d'encre identiques.
